# EUROPÄISCHE PATENTSCHRIFT

(11) **EP 2 879 825 B1**
(45) Veröffentlichungstag und Bekanntmachung des Hinweises auf die Patenterteilung: **13.09.2023**
(21) Anmeldenummer: 13742162.4
(22) Anmeldetag: 26.07.2013
(51) Int. Cl.: B23B 41/12, B23B 29/03, C23C 4/02

(54) **VERFAHREN UND WERKZEUG ZUM AUFRAUEN EINER INNENFLÄCHE EINER ZYLINDRISCHEN BOHRUNG**
METHOD AND TOOL FOR ROUGHENING AN INNER SURFACE OF A CYLINDRICAL BORE
PROCÉDÉ ET DISPOSITIF PERMETTANT DE RENDRE RUGUEUSE UNE SURFACE INTÉRIEURE D'UN ALÉSAGE CYLINDRIQUE

(30) Priorität: 31.07.2012 DE 102012015163
(43) Veröffentlichungstag der Anmeldung: 10.06.2015
(73) Patentinhaber: Mercedes-Benz Group AG, 70372 Stuttgart (DE)
(72) Erfinder: NEUFANG, Oliver, 89134 Blaustein (DE)
(74) Vertreter: Novagraaf Group
(86) Internationale Anmeldenummer: PCT/EP2013/002226
(87) Internationale Veröffentlichungsnummer: WO 2014/019666

(56) Entgegenhaltungen:
- EP-A1- 1 859 881
- EP-A2- 1 916 055
- DE-B3-102006 045 275
- FR-A1- 2 957 541
- US-A- 3 164 039

## Beschreibung

Die Erfindung betrifft ein Verfahren zum Aufrauen einer Innenfläche einer zylindrischen Bohrung nach der im Oberbegriff von Anspruch 1 näher definierten Art. Außerdem betrifft die Erfindung ein Werkzeug zum Aufrauen einer Innenfläche einer zylindrischen Bohrung nach der im Oberbegriff des nebengeordneten Anspruchs 2 näher definierten Art.

Die DE 10 2006 045275 B3 offenbart ein Verfahren nach dem Oberbegriff des Anspruchs 1 und ein Werkzeug nach dem Oberbegriff des Anspruchs

Ein Werkzeug zum Aufrauen einer Innenfläche einer zylindrischen Bohrung ist
aus der DE 102012207455 A1 bekannt. Verfahren und Werkzeuge zum Aufrauen einer Innenfläche einer zylindrischen Bohrung sind aus dem Stand der Technik bekannt. Beispielhaft wird hierzu auf die DE 601 31 096 T2 sowie die EP 1 756 133 B1 verwiesen. Die Werkzeuge bzw. Verfahren gemäß diesen beiden Schriften nutzen ein rotierendes in Axialrichtung verfahrbares Werkzeug mit einem Radialschneidkopf, welcher so in die zylindrische Bohrung hineinbewegt wird, dass er mit dem Radialschneidkopf eine spanabhebende Bearbeitung vornimmt, wonach der bei der Materialabnahme abgehobene Span über eine weitere Schneide bzw. eine Kante oder Fläche desselben Radialschneidkopfs abgebrochen wird. Durch die spanabhebende Bearbeitung mit dem nachfolgenden im gleichen Arbeitsgang erfolgenden Abbrechen des abgehobenen Spans wird eine aufgeraute Oberfläche erzielt, welche eine Vielzahl von Hinterschnitten aufweist. Auch aus der EP 1 859 881 A1 ist ein vergleichbares Werkzeug bekannt, welches zuerst schneidet und anschließend den geschnittenen Span umbricht, um eine Oberfläche für das anschließende thermische Spritzen vorzubereiten.

Eine auf diese Art hergestellte aufgerauhte Oberfläche eignet sich besonders gut, um einer später auf diese Oberfläche aufgebrachten Beschichtung einen idealen Halt zu bieten. Sie wird daher insbesondere zur Vorbereitung von Zylinderbohrungen oder Bohrungen in Zylinderlaufbuchsen von Brennkraftmaschinen eingesetzt, um eine entsprechend aufgeraute Oberfläche bereitzustellen, welche dann mittels einer Beschichtung versehen wird, um die tribologischen Eigenschaften zwischen der Wandung der Bohrung und einem später darin laufenden Kolben zu optimieren. Die Beschichtungen können dabei vorzugsweise thermische Beschichtungen sein, welche insbesondere durch Plasmaspritzen, Lichtbogendrahtspritzen oder dergleichen auf die durch das Aufrauen entsprechend vorbereitete Oberfläche aufgebracht werden.

Den gattungsgemäßen Stand der Technik bildet die DE 10 2006 045 275 B3. In dieser Schrift ist beschrieben, wie in einem ersten Verfahrensschritt eine erste Rille mit einem Hinterschnitt in die eine Richtung und in einem zweiten gegenläufigen Verfahrensschritt eine zweite Rille mit einem gegenläufigen Hinterschnitt hierzu in die Oberfläche eingebracht wird. Hierdurch entsteht eine Art Schwalbenschanzprofil in der Oberfläche, welche eine gute Anhaftung von thermisch gespritzten Schichten ermöglichen soll. Dabei wird sowohl in der Vorschubrichtung als auch beim Herausziehen des Werkzeugs entgegen der Vorschubrichtung das Material des Zylinders spanend bearbeitet.

Die im Stand der Technik beschriebenen Verfahren sind dabei sehr gut geeignet, um in einem Arbeitsgang und damit mit einer sehr kurzen Bearbeitungszeit ein Aufrauen der Innenfläche der Zylinderbohrung zu erzielen, welche später eine sehr gute Anhaftung der Beschichtung gewährleistet. Das Verfahren und die Werkzeuge sind dabei jedoch in ihrer Anwendung vergleichsweise eingeschränkt, da sie durch die Bearbeitung und das Brechen der Späne beim Eintauchen in die zylindrische Bohrung eine Bearbeitung mit einer Anordnung der axialen Ausrichtung des Werkzeugs und der zylindrischen Bohrung in Vertikalrichtung oder lediglich um einen geringen Winkel aus der Vertikalen geneigt erfordern. Nur hierdurch ist sichergestellt, dass die beim Bearbeitungsprozess entstehenden Späne nach unten in die zylindrische Bohrung bzw. aus der zylindrischen Bohrung herausfallen. Eine entsprechende Bearbeitung auf Werkzeugmaschinen mit horizontaler Spindel, so haben zahlreiche Versuche gezeigt, ist in der Praxis außerordentlich schwierig, da Späne im Bereich der bearbeiteten Oberfläche liegen bleiben können und während des Bearbeitungsprozesses dann zu einem entsprechenden Klemmen des Werkzeugs in der zylindrischen Bohrung führen können. Neben den damit verbundenen Problemen hinsichtlich des Werkzeugs und der Bearbeitungszeit führt dies im Allgemeinen auch zu gravierenden Problemen dahingehend, dass durch die Späne die bereits hergestellte aufgeraute Oberfläche in ihrer Oberflächenqualität beeinträchtigt wird, oder dass die Späne, insbesondere bei einem Arbeiten in Aluminium, Aluminiumlegierungen oder anderen Leichtmetalllegierungen, zu einem Verschmieren neigen. Auch hierdurch wird die gewünschte aufgeraute Oberfläche beeinträchtigt und eine später aufgebrachte thermische Beschichtung kann hier nicht ausreichend anhaften, was zu gravierenden Qualitätsproblemen führen kann.

Ferner sind aus der EP 1 916 055 A2 sowie der US 3,164,039 A Werkzeuge zur Innenbearbeitung von Rohren bekannt, bei welchen im Eingriff befindliche Bearbeitungsinstrumente durch Kühlschmierstoff oder Druckluft gespült werden.

Letztlich beschreibt die FR 2 957 541 A1 die Innenbearbeitung eines Zylinders in einem Zylinderblock, insbesondere für einen Verbrennungsmotor.

Die Aufgabe der hier vorliegenden Erfindung besteht nun darin, ein Verfahren und ein Werkzeug hierfür anzugeben, welche diese Nachteile vermeiden und einen einfachen, zuverlässigen und kostengünstigen Herstellungsprozess gewährleisten.

Erfindungsgemäß wird diese Aufgabe durch das Verfahren mit den Merkmalen des Anspruchs 1 gelöst. Vorteilhafte Weiterbildungen des erfindungsgemäßen Verfahrens ergeben sich aus den abhängigen Unteransprüchen. Die Aufgabe wird außerdem durch ein Werkzeug mit den Merkmalen des nebengeordneten Anspruchs 2 gelöst. Vorteilhafte Weiterbildungen und Ausgestaltungen des Werkzeugs ergeben sich aus den abhängigen Unteransprüchen.

Bei dem erfindungsgemäßen Verfahren ist es nun so, dass über einen weiteren Radialschneidkopf im selben Arbeitsgang in Vorschubrichtung vor dem Radialschneidkopf zum Aufrauen der Innenfläche eine schlichtende Bearbeitung der Innenfläche der zylindrischen Bohrung vorgenommen wird. Eine solche Kombination von Schlichten und anschließendem Aufrauen in einem einzigen Arbeitsgang ist besonders günstig und effizient, da hierdurch ein zusätzlicher Arbeitsgang eingespart werden kann. Insbesondere bei der erfindungsgemäß gegenüber dem Stand der Technik umgedrehten Vorschubrichtung kann dies besonders effizient gestaltet werden, da die beim Schlichten anfallenden Späne insbesondere beim Einsatz auf einem Horizontalspindler in Vorschubrichtung durch eine geeignete Spülmedienzufuhr ausgebracht werden können.

Erfindungsgemäß wird ein Spülmedium zur Spülung und/oder Kühlung in den Bereich des Radialschneidkopfs zum Aufrauen der Innenfläche mit einer Richtungskomponente entgegen der Vorschubrichtung zugeführt, und ein Spülmedium zur Spülung und/oder Kühlung in den Bereich des weiteren Radialschneidkopfs mit einer Richtungskomponente in Vorschubrichtung zugeführt. Eventuell dennoch zwischen dem Werkzeug und der Oberfläche verbleibende Späne sind dabei unkritisch, da dieser Bereich durch den nachfolgenden Schlichtungsprozess noch bearbeitet werden muss. In Vorschubrichtung nach dem Schlichtungsprozess erfolgt über den zweiten Radialschneidkopf das Aufrauen der Innenfläche der zylindrischen Bohrung in der beschriebenen Art und Weise. Dabei anfallende Späne werden, wie bereits beschrieben, über die bearbeitete Fläche fortgespült oder können dort auch liegenbleiben, was unkritisch ist, da das Werkzeug aus dem Bereich dieser Fläche bereits herausgefahren worden ist.

Ein erfindungsgemäßes Werkzeug ist gemäß Anspruch 2 so aufgebaut, dass neben einem ersten Radialschneidkopf zum Aufrauen der Innenfläche der zylindrischen Bohrung ein weiterer Radialschneidkopf zum Schlichten der Innenfläche der zylindrischen Bohrung vorhanden ist, welcher in axialer Richtung zwischen einer Werkzeugaufnahme und dem Radialschneidkopf zum Aufrauen der Innenfläche der zylindrischen Bohrung angeordnet ist. Dieses Werkzeug mit den beiden Radialschneidköpfen einerseits zum Schlichten und andererseits zum Aufrauen ist dabei so ausgebildet, dass dieses vorzugsweise gemäß dem erfindungsgemäßen Verfahren verwendet werden kann, also mit einer Vorschubrichtung während der Materialabnahme zu der Werkzeugaufnahme hin. Das Werkzeug kann also insbesondere in oder durch die zylindrische Bohrung hindurchgeführt werden, entsprechend positioniert werden und dann beim Herausfahren aus der zylindrischen Bohrung den gewünschten Materialabtrag vornehmen. Da der Radialschneidkopf zum Schlichten aus Blickrichtung von der Werkzeugaufnahme her zuerst und der Radialschneidkopf zum Aufrauen der Innenfläche der zylindrischen Bohrung aus der Blickrichtung von der Werkzeugaufnahme her danach angeordnet ist, ergibt sich eine Bearbeitung, welche in einem einzigen Arbeitsschritt zuerst die Oberfläche auf das gewünschte Maß schlichtet, um sie dann aufzurauen.

Das erfindungsgemäße Werkzeug zeichnet sich dadurch aus, dass wenigstens eine Spülmedienleitung mit jeweils einem mit jedem der Radialschneidköpfe korrespondierenden Spülmedienauslass vorgesehen ist. Der Spülmedienauslass, welcher mit dem Radialschneidkopf zum Aufrauen der Innenfläche der zylindrischen Bohrung korrespondiert, ist dabei so ausgebildet, dass er eine Richtungskomponente in Richtung der Werkzeugspitze hat. Spülmedium, welches über diesen Spülmedienauslass austritt, spült damit Späne in Richtung der Werkzeugspitze, also entgegen der Vorschubrichtung, von der aufgerauten und damit endbearbeiteten Oberfläche weg, sodass ein Anhaften und Einklemmen von Spänen sicher und zuverlässig verhindert wird. Der andere Spülmedienauslass ist so angeordnet, dass dieser mit dem Radialschneidkopf zum Schlichten der Innenfläche der zylindrischen Bohrung korrespondiert, und zwar so, dass dieser eine Richtungskomponente in Richtung der Werkzeugaufnahme aufweist. Beim Schlichten anfallende Späne werden dadurch in Richtung der Werkzeugaufnahme, also in Richtung der Vorschubrichtung, fortgespült. Sie gelangen zwischen dem Werkzeug bzw. Werkzeugschaft und den Wandungen der zylindrischen Bohrung aus dieser. Das Einklemmen der Späne wird durch das über den entsprechend gerichteten Spülmedienauslass austretende Spülmedium weitgehend verhindert oder zumindest auf eine minimale Restanzahl von gegebenenfalls eingeklemmten Spänen reduziert. Ferner wird hierdurch verhindert, dass die Späne vom Schlichten in den Bereich des Radialschneidkopfs zum Aufrauen der Oberfläche und in den Bereich der aufgerauten Oberfläche gelangen und dort einen entsprechenden Schaden anrichten können. Aufgrund der noch nicht aufgerauten Oberfläche im Bereich des Schafts des Werkzeugs zwischen der Werkzeugaufnahme und dem Radialschneidkopf zum Schlichten sind die Späne hier unkritisch. Sollten sie wider erwarten dennoch durch das Werkzeug in die Oberfläche gedrückt werden, so wird eine Beeinträchtigung der Oberfläche beim anschließenden Schlichten wieder entfernt. Entscheidend ist es dabei, dass die Späne nicht in den Bereich der aufgerauten Oberfläche oder des Radialschneidkopfs zum Aufrauen gelangen, dies ist durch die entsprechende Ausrichtung des Spülmedienauslasses im Bereich des Radialschneidkopfs zum Schlichten gewährleistet.

In einer sehr günstigen Ausgestaltung des erfindungsgemäßen Werkzeugs ist es dabei ferner vorgesehen, dass die beiden Radialschneidköpfe in Umfangsrichtung um einen Winkel von bis zu 120°, vorzugsweise um einen Winkel von bis zu 90° versetzt zueinander angeordnet sind. Die beiden Radialschneidköpfe sind in Umfangsrichtung, also bei einer Draufsicht auf das Werkzeug beispielsweise von der Werkzeugspitze her, um einen gewissen Winkel versetzt zueinander angeordnet. Dies sorgt für die Möglichkeit, die beiden Radialschneidköpfe in axialer Richtung vergleichsweise dicht beieinander in der oben beschriebenen Reihenfolge zu positionieren. Dadurch, dass der Winkel in Umfangsrichtung kleiner als 120°, vorzugsweise kleiner als 90° ausgebildet ist, ergibt sich dennoch die Möglichkeit, das Werkzeug mit seiner Rotationsachse außermittig in der zylindrischen Bohrung zu platzieren, um dieses beim Hineinfahren ohne Kontakt mit den Innenflächen der zylindrischen Bohrung oder allenfalls mit einem minimalen Kontakt positionieren zu können. Erst dann wird das Werkzeug in der gewünschten Art und Weise positioniert, typischerweise indem die Positionierung so erfolgt, dass die Rotationsachse des Werkzeugs und die zentrale Achse der Zylinderbohrung deckungsgleich angeordnet werden. Das Werkzeug wird dann in Vorschubrichtung aus der zylindrischen Bohrung herausgezogen und sorgt dabei für die gewünschte Materialabnahme, nämlich das Schlichten einerseits und das im selben Arbeitsschritt danach erfolgende Aufrauen der Oberfläche andererseits.

In einer weiteren Ausgestaltung kann das erfindungsgemäße Werkzeug ferner einen dritten Radialschneidkopf zum Kappen von eventuell überstehenden Spänen vorsehen, welcher in axialer Richtung zwischen dem Radialschneidkopf zum Aufrauen der Innenfläche der zylindrischen Bohrung und der Werkzeugspitze angeordnet ist. Dieser Radialschneidkopf ist in Umfangsrichtung versetzt zu jedem der beiden anderen Schneidköpfe angeordnet. Dieser zusätzliche Radialschneidkopf als Kappschneide ist lediglich ein zusätzliches Sicherheitsinstrument, welches eventuell überstehende Reste der abgebrochenen Späne entsprechend kappt, sodass diese nicht so weit über die Oberfläche der zylindrischen Bohrung hinausstehen, dass diese eine später aufgebrachte thermische Beschichtung gegebenenfalls überragen könnten. Um die drei Radialschneidköpfe entsprechend dicht in axialer Richtung beieinander in der beschriebenen Reihenfolge positionieren zu können, ist auch dieser weitere Radialschneidkopf zum Kappen von eventuell verbleibenden Überständen von Spänen entsprechend in Umfangsrichtung versetzt angeordnet.

In einer vorteilhaften Weiterbildung hiervon ist es dabei vorgesehen, dass alle drei Radialschneidköpfe in Umfangsrichtung jeweils um einen Winkel versetzt zueinander angeordnet sind, wobei die Summe der Winkel maximal 120°, bevorzugt maximal 90° beträgt. Trotz der drei einzelnen Radialschneidköpfe ist dann weiterhin sichergestellt, dass das Werkzeug mit den Radialschneidköpfen außermittig positioniert werden kann, um dieses so in die zylindrische Bohrung hineinzufahren oder gegebenenfalls auch herausfahren zu können, ohne dass ein Materialabtrag oder eine Beeinträchtigung der Oberfläche der zylindrischen Bohrung erfolgt.

In einer vorteilhaften Weiterbildung hiervon ist es ferner vorgesehen, dass der dritte Radialschneidkopf ohne Spülmedienversorgung ausgebildet ist. Auf eine Spülmedien- bzw. Kühlmedienversorgung des dritten Radialschneidkopfs, welcher lediglich zum Kappen von eventuell verbleibenden Überständen von Spänen dient, kann typischerweise verzichtet werden, da dieser zum Kappen genutzte Radialschneidkopf nicht sehr häufig zum Einsatz kommt und im Falle eines Einsatzes nur kurzzeitig und mit minimaler Schneidfläche im Einsatz ist. Ein Kühlen und Spülen kann deshalb unterbleiben, ohne dass hierdurch Nachteile für die gewünschte aufgeraute Oberfläche entstehen. Der Verzicht auf einen weiteren Spülmittelauslass im Bereich des Werkzeugs ermöglicht jedoch eine deutliche Vereinfachung des Werkzeugs mit den entsprechenden Vorteilen bei den Werkzeugkosten und der Herstellung des Werkzeugs.

Das erfindungsgemäße Verfahren kann vorzugsweise zum Aufrauen einer Innenfläche einer zylindrischen Bohrung als Vorbereitung für eine thermische Beschichtung, insbesondere mittels Lichtbogendrahtspritzen eingesetzt werden. Speziell für diesen Einsatzzweck bietet das Aufrauen in der genannten Art, welches durch das erfindungsgemäße Verfahren einfach und effizient auf Werkzeugmaschinen mit Horizontalspindel eingesetzt werden kann, deutliche Vorteile, da es eine sehr gute Anhaftung einer thermischen Beschichtung gewährleistet. Die Verwendung des Verfahrens kann dabei insbesondere für Innenflächen aus einem Nichteisenmetall, insbesondere Aluminium oder einer das Nichteisenmetall aufweisenden Legierung erfolgen. Vor allem bei Nichteisenmetallen, insbesondere bei Leichtmetallen wie beispielsweise Aluminium oder Legierungen hiervon, ist die thermische Beschichtung beispielsweise von Zylinderlaufflächen in Brennkraftmaschinen von entscheidender Bedeutung, da durch die thermische Beschichtung eine Verbesserung der tribologischen Eigenschaften an der Brennkraftmaschine erzielt werden kann, ohne auf die Vorteile der Leichtmetalle hinsichtlich Gewicht, Herstellungsverfahren und dergleichen verzichten zu müssen. Vor allem für diese Aufbauten ist das erfindungsgemäße Verfahren daher besonders gut geeignet.

Wie bereits mehrfach erwähnt, kann sowohl das erfindungsgemäße Verfahren als auch das erfindungsgemäße Werkzeug vorzugsweise auf einer Werkzeugmaschine mit wenigstens einer Horizontalspindel zur Aufnahme des Werkzeugs eingesetzt werden. Derartige Horizontalspindler sind entsprechend einfacher und kostengünstiger als vergleichbare Werkzeugmaschinen mit Vertikalspindel. Außerdem sind Werkzeugmaschinen mit Horizontalspindeln in üblichen Transferstraßen, beispielsweise im Bereich der Automobilindustrie, allgemein bekannt und üblich, sodass ohne großen Umrüstungsaufwand die Bearbeitung in eine derartige Transferstraße verlegt werden kann, was wiederum Synergien hinsichtlich der Fertigung und der Fabrikplanung schafft und damit entsprechende Kostenvorteile gegenüber den ohnehin sehr viel teureren Maschinen mit Vertikalspindel ermöglicht.

Weitere vorteilhafte Ausgestaltungen des erfindungsgemäßen Verfahrens sowie des Werkzeugs gemäß der Erfindung ergeben sich aus den restlichen abhängigen Unteransprüchen und werden anhand eines Ausführungsbeispiels deutlich, welches nachfolgend unter Bezugnahme auf die Figuren näher beschrieben ist.

Dabei zeigen:
- Fig. 1: eine schematische Darstellung eines Werkzeugs und eines Verfahrens zum Aufrauen einer Innenfläche einer zylindrischen Bohrung gemäß dem Stand der Technik;
- Fig. 2: eine schematische Darstellung eines Werkzeugs und eines Verfahrens zum Aufrauen einer Innenfläche einer zylindrischen Bohrung nicht gemäß der Erfindung;

- Fig. 3: eine schematische Darstellung eines erfindungsgemäßen Werkzeugs und eines Verfahrens zum Aufrauen einer Innenfläche einer zylindrischen Bohrung gemäß der Erfindung in einer Ausführungsform; und
- Fig. 4: eine Draufsicht auf das in Fig. 3 dargestellte Werkzeug.

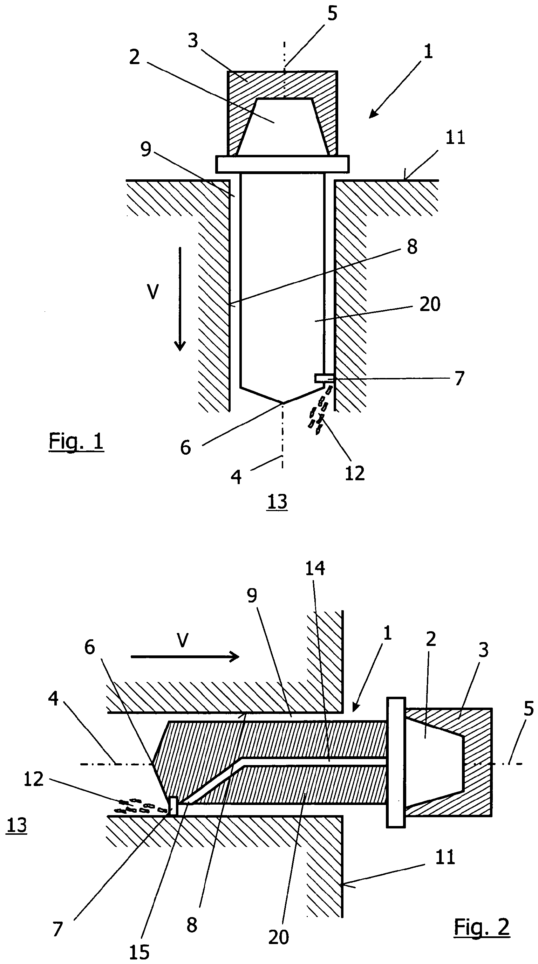

In der Darstellung der Figur 1 ist ein Aufbau gemäß dem Stand der Technik zu erkennen.

Ein Werkzeug 1 ist mit einer Werkzeugaufnahme 2 in einem entsprechenden Gegenstück 3 einer hier nicht in ihrer Gesamtheit dargestellten Werkzeugmaschine aufgenommen. Eine zentrale Achse 4 des Werkzeugs 1 sowie eine die Spindel der Werkzeugmaschine symbolisierende Achse 5 sind dabei fluchtend zueinander angeordnet. Die Werkzeugmaschine ist mit einer vertikal verlaufenden Spindel und dementsprechend mit einer vertikal verlaufenden Achse 5 ihrer Spindel ausgebildet. Derartige Werkzeugmaschinen werden auch als Vertikalspindler bezeichnet. Das Werkzeug 1 selbst weist auf der axial gegenüberliegenden Seite der Werkzeugaufnahme 2 eine Werkzeugspitze 6 auf. Im Bereich dieser Werkzeugspitze 6 befindet sich ein prinzipmäßig angedeuteter Radialschneidkopf 7, welcher zum Aufrauen einer Innenfläche 8 einer zylindrischen Bohrung 9 eingesetzt wird. Der Radialschneidkopf 7 zum Aufrauen der Innenfläche 8 wird nachfolgend vereinfachend als Aufrauschneide 7 bezeichnet. Bei der zylindrischen Bohrung soll es sich insbesondere um die Zylinderbohrung in einem angedeuteten Kurbelgehäuse 10 einer Brennkraftmaschine aus einer Leichtmetalllegierung, insbesondere einer Aluminiumlegierung, handeln. Die Innenfläche 8 der zylindrischen Bohrung 9 wird über die Aufrauschneide 7 des Werkzeugs 1 aufgeraut, um diese auf eine thermische Beschichtung beispielsweise durch Plasmaspritzen oder insbesondere durch Lichtbogendrahtspritzen ideal vorzubereiten. Durch das Aufrauen der Innenfläche 8 wird eine sehr gute Anhaftung der thermischen Beschichtung erreicht, da das Aufrauen mittels Abheben und anschließendem Brechen der abgehobenen Späne eine Oberfläche hinterlässt, welche zahlreiche Hinterschnitte aufweist, mit denen sich das Material der thermischen Beschichtung entsprechend verklammern kann.

Die mit V bezeichnete Vorschubrichtung des Werkzeugs 1 bei der Materialabnahme, also der Bearbeitung der Innenfläche 8 durch die Aufrauschneide 7, ist dabei so, dass das Werkzeug 1 von einer Zylinderkopftrennfläche 11, welche im dargestellten Ausführungsbeispiel oben angeordnet ist, in die zylindrische Bohrung 9 hineingefahren wird und dabei der Materialabtrag auftritt. Die beim Aufrauen entstehenden Späne 12 fallen bei dieser Anordnung aufgrund der Schwerkraft nach unten aus der zylindrischen Bohrung 9 heraus in Richtung eines Kurbelwellenraums 13. Der Nachteil bei diesem Aufbau gemäß dem Stand der Technik besteht im Wesentlichen darin, dass er auf die hier dargestellte Ausrichtung der Achse 4 des Werkzeugs 1, welche während der Bearbeitung mit der Rotationsachse der zylindrischen Bohrung 9 zusammenfällt, und insbesondere der Achse 5 der Spindel der Werkzeugmaschine eingeschränkt ist. Würde man von dem vergleichsweise komplexen und teuren Vertikalspindler als Werkzeugmaschine auf einen Horizontalspindler wechseln, dann würden die Späne 12 nicht mehr aufgrund der Schwerkraft nach unten in das Kurbelgehäuse fallen, sondern könnten zumindest zum Teil zwischen einem Schaft 20 des Werkzeugs 1 und der bereits aufgerauten Innenfläche 8 zu liegen kommen und würden hier eingeklemmt. Dies würde einerseits zu einer Beeinträchtigung des Werkzeugs 1 und der Genauigkeit der Bearbeitung führen und würde andererseits schlimmstenfalls die Bearbeitung unterbrechen. In jedem Fall würde es durch ein Einklemmen der Späne 12 zwischen dem Schaft 20 des Werkzeugs 1 und der bereits bearbeiteten Innenfläche 8 der zylindrischen Bohrung 9 zu einer Beeinträchtigung dieser Innenfläche 8 und damit zu einer Verschlechterung der aufgerauten Innenfläche 8 kommen, welche später dann zu einer ungenügenden Haftung der thermischen Beschichtung führen könnte. Dies würde einen gravierenden Nachteil darstellen, sodass man bei dem hier beschriebenen Aufbau und dem damit einhergehenden Verfahren auf die Verwendung eines Vertikalspindlers als Werkzeugmaschine eingeschränkt ist.

In der Darstellung der Figur 2 ist nun ein vergleichbarer Aufbau zu erkennen, wobei dieser mit einer horizontalen Anordnung der Achse 5 der Spindel der Werkzeugmaschine ausgebildet ist und damit auf einem sogenannten Horizontalspindler als Werkzeugmaschine durchgeführt werden kann. Dies bringt entscheidende Vorteile bei der Fertigung, da Horizontalspindler einfacher und robuster aufgebaut werden können und daher entsprechend kostengünstiger sind. Außerdem sind in den üblichen Transferstraßen, wie sie beispielsweise in der Fertigung der Automobilindustrie eingesetzt werden, Horizontalspindler mit einer oder insbesondere mehreren Spindeln die üblichen Typen von Werkzeugmaschinen, sodass der in Figur 2 dargestellte Aufbau eine einfache und kostengünstigere Fertigung ermöglicht. Erzielt wird dies dadurch, dass die Vorschubrichtung V gegenüber den Aufbauten gemäß dem Stand der Technik umgedreht wird. Ansonsten entspricht der Aufbau und die zur Beschreibung des Aufbaus verwendeten Bezugszeichen weitgehend den in Figur 1 bereits beschriebenen Details. Dadurch, dass das Werkzeug 1 nun typischerweise außermittig in die zylindrische Bohrung 9 hineingefahren oder gegebenenfalls auch bis in den Kurbelwellenraum 12 durch diese hindurchgefahren wird, wird beim Eintauchen des Werkzeugs 1 in die zylindrische Bohrung 9 keine Bearbeitung erfolgen, sodass hierdurch auch keine Späne anfallen, welche zwischen dem Schaft 20 des Werkzeugs 1 und der Innenfläche 8 liegen bleiben und dort eingeklemmt werden können. Erst danach wird das Werkzeug 1 mit seiner Achse 4 in die entsprechende Position gebracht, insbesondere so, dass die Achse 4 deckungsgleich einer Achse mit der zylindrischer Bohrung 9 ist. Danach beginnt die eigentliche Bearbeitung, indem das Werkzeug 1, welches, wie auch im Stand der Technik während der Bearbeitung um seine Achse 4 rotiert, in der Vorschubrichtung V in diesem Fall aus der zylindrischen Bohrung 9 herausgefahren wird. Eventuelle Späne 12 fallen dabei nicht zwischen dem Schaft 20 und der Innenfläche 8 der zylindrischen Bohrung 9 an, sondern liegen allenfalls in dem Bereich auf der bereits aufgerauten Oberfläche der Innenfläche 8, welcher nicht mehr von Teilen des Werkzeugs 1 überdeckt ist, sodass ein Einklemmen und gegebenenfalls ein Verschmieren der Späne 12 in der bereits aufgerauten Oberfläche sicher und zuverlässig unterbleibt. Hierdurch wird die Bearbeitung auch in der gezeigten Art auf Bearbeitungsmaschinen mit horizontaler Achse 5 ihrer Spindel möglich, wobei das Verfahren selbstverständlich auch weiterhin für Maschine mit vertikaler Spindel grundsätzlich geeignet ist.

Eine weitere Verbesserung der Spanabfuhr ermöglicht eine Spülmedienleitung 14 mit einem Spülmedienauslass 15 im Bereich der Aufrauschneide 7. Durch die Zufuhr eines geeigneten Spülmediums kann so während des Bearbeitungsprozesses einerseits gekühlt und andererseits ein Fortspülen der entstehenden Späne gewährleistet werden. Das Spülmedium wird dabei durch die Werkzeugaufnahme 2 und den Schaft 20 des Werkzeugs 1 über die nicht dargestellte Werkzeugmaschine in an sich bekannter Art und Weise zugeführt. Grundsätzlich sind verschiedene Spülmedien oder auch Kühl- und Spülmedien geeignet, wie sie aus dem Stand der Technik bekannt sind. Der Einsatz von ölhaltigen Emulsionen kann dabei insbesondere beim Bearbeiten von zylindrischen Bohrungen 9 oder Zylinderbuchsen aus Grauguss oder anderen Eisenmaterialien sinnvoll sein, da hier eine intensive Kühlung neben dem Fortspülen der Späne notwendig ist. Im Fall des Einsatz einer herkömmlichen Kühlemulsion müsste dann jedoch eine aufwändige Reinigung der aufgerauten Oberfläche erfolgen, um Rückstände vollständig zu entfernen und so das gute Anhaften der späteren thermischen Beschichtung auf der Innenfläche 8 der zylindrischen Bohrung zu gewährleisten. Dies ist ein zusätzlicher aufwändiger Arbeitsschritt, welcher gegebenenfalls auch mit einer unerwünschten Beeinträchtigung der aufgerauten Oberfläche einhergeht. Deshalb ist es, und dies insbesondere für die Bearbeitung von Leichtmetalllegierungen, wünschenswert, wenn als Spülmedium eine ölfreie und trockene bzw. weitgehend trockene Druckluft oder gegebenenfalls auch ein anderes geeignetes Gas eingesetzt wird. Hierdurch wird eine ausreichende Kühlung bei der Bearbeitung von Leichtmetalllegierungen erzielt und das Spülmedium kann insbesondere die Aufgabe übernehmen, die entstehenden Späne 12 entsprechend fortzuspülen und die Gefahr einer Beeinträchtigung der bereits fertig aufgerauten Oberfläche durch die Späne 12 zu minimieren.

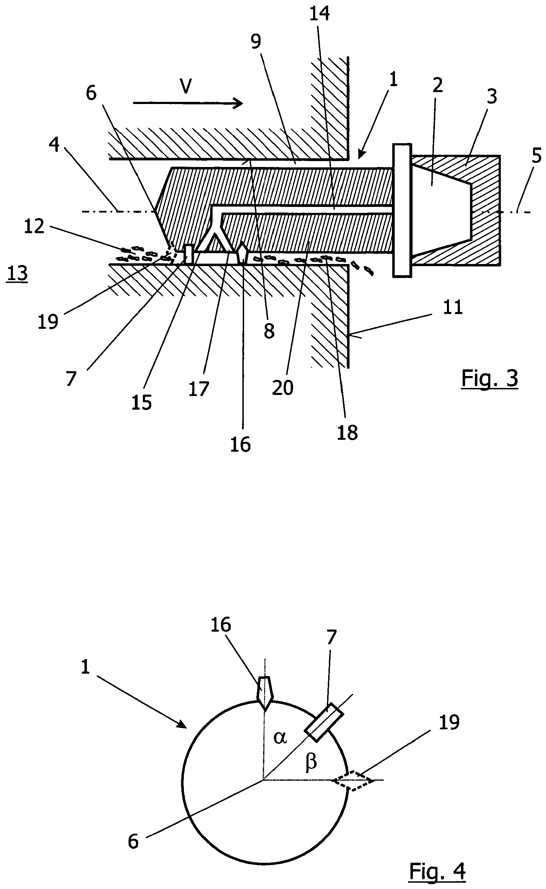

In der Darstellung der Figur 3 ist nun eine Ausführungsform des Werkzeugs 1 analog zur Darstellung in Figur 2 zu erkennen. Auch hier verläuft die Vorschubrichtung wiederum vom Bereich des Kurbelwellenraums 13 hin zu der Zylinderkopftrennfläche 11 und das Werkzeug 1 ist im Wesentlichen analog zu dem bereits beschriebenen Aufbau ausgeführt. Im Gegensatz zu dem bisher beschriebenen Werkzeug 1 weist das hier dargestellte Werkzeug 1 neben der Aufrauschneide 7 als Radialschneidkopf einen weiteren Radialschneidkopf 16 zum Schlichten der Innenfläche 8 der zylindrischen Bohrung 9 auf. Der oben bereits beschriebenen Systematik folgend wird dieser Radialschneidkopf 16 zum Schlichten der Innenfläche 8 nachfolgend als Schlichtschneide 16 bezeichnet. Die Schlichtschneide 16 ist dabei axial beabstandet zu der Aufrauschneide 7 angeordnet, und zwar so, dass die Schlichtschneide 16 zwischen der Aufrauschneide 7 und der Werkzeugaufnahme 2 angeordnet ist. Bei der beschriebenen Vorschubrichtung V bedeutet dies, dass zuerst die Schlichtschneide 16 im Eingriff mit dem die zylindrische Bohrung 9 umgebenden Material steht und dieses auf das gewünschte Maß schlichtet. Die so auf das gewünschte Maß fertig geschlichtete Innenfläche 8 der zylindrischen Bohrung 9 wird dann in der oben bereits beschriebenen Art und Weise über die Aufrauschneide 7 aufgeraut. Die Schlichtschneide 16 und dieAufrauschneide 7 sind dabei in der Praxis anders als in der schematischen Darstellung der Figur 3 in axialer Richtung lediglich um einige Millimeter gegeneinander versetzt angeordnet. Um einen solchen kompakten Aufbau entsprechend realisieren zu können, sind die Aufrauschneide 7 und die Schlichtschneide 16 dafür in Umfangsrichtung des Werkzeugs 1 um einen Winkel α versetzt gegeneinander angeordnet, wie es in einer Draufsicht auf das Werkzeug 1 von der Werkzeugspitze 6 her in der Darstellung der Figur 4 zu erkennen ist.

Das Werkzeug 1 weist wiederum die Spülmedienleitung 14 zur Zufuhr eines Kühl- und/oder Spülmediums auf. Das Spülmedium sollte dabei analog den oben beschriebenen Beispielen nach Möglichkeit ölfrei und weitgehend trocken sein, es kann sich insbesondere um entsprechend aufbereitete Druckluft handeln. Der mit der Aufrauschneide 7 korrespondierende Spülmedienauslass 15 ist wiederum analog der Darstellung in Figur 2 so angeordnet, dass die beim Aufrauen anfallenden Späne 12 über die bereits aufgeraute Oberfläche der Innenfläche 8 fortgespült werden, ohne dass es hierbei zu einem Einklemmen der Aufrauspäne 12 kommen kann, da die bereits bearbeitete Oberfläche nicht oder nicht nennenswert von dem Schaft 20 des Werkzeugs 1 überdeckt ist. Ein zweiter Spülmedienauslass 17 ist nun mit einer Richtungskomponente in Vorschubrichtung, also in Richtung der Werkzeugaufnahme 2, ausgebildet. Dieser Spülmedienauslass 17 korrespondiert mit der Schlichtschneide 16 und sorgt durch die gerichtete Zuführung der Druckluft dafür, dass die beim Schlichten anfallenden Schlichtspäne, welche hier nachfolgend mit 18 bezeichnet sind, entlang des Schafts 20 durch die zylindrische Bohrung 9 herausgespült werden. Falls diese Funktionalität des Herausspülens der Schlichtspäne 18 beeinträchtigt wäre, dann würden Schlichtspäne 18 zwischen der Innenfläche 8 und dem Schaft 13 entsprechend eingeklemmt, was ebenfalls zu einem Verschmieren der Späne und einer Beeinträchtigung der Oberfläche der Innenfläche 8 in diesem Bereich führen könnte.

Anders als bei dem Aufbau gemäß dem Stand der Technik, bei dem dieser Bereich bereits bearbeitet ist, ist dies aufgrund der umgekehrten Vorschubrichtung V hier jedoch vergleichsweise unkritisch, da die Oberfläche in diesem Bereich noch bearbeitet werden muss und damit eventuelle Beeinträchtigungen beim Schlichten der Oberfläche durch die Schlichtschneide 16 wieder entfernt werden, sodass diese die Qualität der Bearbeitung nach Abschluss derselben nicht mehr nachteilig beeinflussen.

In der Darstellung der Figur 3 ist außerdem ein weiterer optionaler Radialschneidkopf 19 zu erkennen. Dieser ist in axialer Richtung des Werkzeugs 1 zwischen der Werkzeugspitze 6 und der Aufrauschneide 7 angeordnet und, wie in der Darstellung der Figur 4 zu erkennen ist, gegenüber den beiden anderen Schneiden 7, 16 wiederum in Umfangsrichtung versetzt ausgeführt. Der Radialschneidkopf 19 dient dazu, eventuell verbleibende überstehende Späne im Bereich der bereits aufgerauten Oberfläche zu kappen, um so zu verhindern, dass überstehende Späne bzw. Spanreste, welche ungenügend abgebrochen worden sind, übrig bleiben, da diese die spätere thermische Beschichtung durchragen und in ihrer Qualität beeinträchtigen könnten. Entsprechend der oben beschriebenen Systematik kann der Radialschneidkopf 19 zum Kappen der eventuell verbliebenen überstehenden Späne auch als Kappschneide 19 bezeichnet werden.

In der Darstellung der Figur 4 ist nun zu erkennen, dass die in axialer Richtung typischerweise um wenige Millimeter versetzt zueinander angeordneten Schneiden 7, 16, 19 in Umfangsrichtung des Werkzeugs 1 jeweils um einen entsprechenden Winkel versetzt zueinander angeordnet sind. Wie oben bereits beschrieben, ist in der Darstellung der Figur der Winkel zwischen der Aufrauschneide 7 und der Schlichtschneide 16 mit α bezeichnet. Der Winkel zwischen der Aufrauschneide 7 und der optionalen Kappschneide 19 ist in der Darstellung der Figur 4 mit β bezeichnet. Entgegen der Darstellung wäre es selbstverständlich auch möglich, die der einzelnen Schneiden 7, 16, 19 in Umfangsrichtung in einer anderen beliebigen Reihenfolge anzuordnen. Entscheidend für den Aufbau des Werkzeugs 1 ist es nun, dass die Summe der beiden Winkel α und β kleiner als 120°, vorzugsweise maximal 90°, ist. Diese Anordnung aller drei Schneiden 7, 16, 19 oder, falls die Kappschneide 19 nicht vorhanden ist, der beiden Schneiden 7, 16 in einem Winkel von idealerweise maximal 90° zueinander gewährleistet die Möglichkeit, das Werkzeug 1 außermittig in der zylindrischen Bohrung 9 zu positionieren, um dieses entgegen der Vorschubrichtung V in die zylindrische Bohrung 9 einzuführen, ohne dabei bereits einen Materialabtrag vorzunehmen. Erst dann wird das Werkzeug 1 entsprechend positioniert und in Vorschubrichtung V unter Materialabtrag wieder aus der zylindrischen Bohrung 9 herausgefahren.

## Patentansprüche

1. Verfahren zum Aufrauen einer Innenfläche (8) einer zylindrischen Bohrung (9), insbesondere einer Lauffläche in einer Zylinderbohrung oder Zylinderbuchse einer Brennkraftmaschine, wobei über ein rotierendes und in Axialrichtung der zylindrischen Bohrung (9) translatorisch bewegtes Werkzeug (1) mit einem Radialschneidkopf (7) mit wenigstens einer Schneidkante des Radialschneidkopfs (7) ein Span (12) abgehoben und mittels einer weiteren Kante oder Fläche des Radialschneidkopfs (7) abgebrochen wird, um die aufgeraute Oberfläche zu erzeugen, wobei das Werkzeug (1) in die zylindrische Bohrung (9) eingeführt oder durch diese hindurchgeführt wird, wonach eine Positionierung des Werkzeugs (1) in radialer Richtung erfolgt, und wonach über das rotierende Werkzeug (1) die Materialabnahme beim Herausfahren des Werkzeugs (1) in seiner Vorschubrichtung (V) aus der zylindrischen Bohrung (9) erfolgt,
**dadurch gekennzeichnet, dass**
über einen weiteren Radialschneidkopf (16) im selben Arbeitsgang in Vorschubrichtung (V) vor dem Radialschneidkopf (7) zum Aufrauen der Innenfläche (8) eine schlichtende Bearbeitung der Innenfläche (8) der zylindrischen Bohrung (9) vorgenommen wird,
und dass ein Spülmedium zur Spülung und/oder Kühlung in den Bereich des Radialschneidkopfs (7) zum Aufrauen der Innenfläche (8) mit einer Richtungskomponente entgegen der Vorschubrichtung (V) zugeführt wird, und ein Spülmedium zur Spülung und/oder Kühlung in den Bereich des weiteren Radialschneidkopfs (16) mit einer Richtungskomponente in Vorschubrichtung (V) zugeführt wird.

2. Werkzeug (1) zum Aufrauen einer Innenfläche (8) einer zylindrischen Bohrung (9), insbesondere einer Lauffläche in einer Zylinderbohrung oder Zylinderbuchse einer Brennkraftmaschine, mit einem Radialschneidkopf (7), welcher wenigstens eine Schneidkante zum Abheben eines Spans (12) und wenigstens eine weitere Kante oder Fläche zum Abbrechen des Spans (12) aufweist, um eine aufgeraute Oberfläche zu erzeugen, mit einer Werkzeugaufnahme (2), ausgelegt um mit einer Werkzeugmaschine zusammenzuwirken, und mit einer der Werkzeugaufnahme (2) in axialer Richtung gegenüberliegenden Werkzeugspitze (6),
**dadurch gekennzeichnet, dass**
ein weiterer Radialschneidkopf (16) zum Schlichten der Innenfläche (8) der zylindrischen Bohrung (9) in axialer Richtung zwischen der Werkzeugaufnahme (2) und dem Radialschneidkopf (7) zum Aufrauen der Innenfläche (8) der zylindrischen Bohrung (9) angeordnet ist, und dass wenigstens eine Spülmedienleitung (14) mit jeweils einem mit dem Radialschneidkopf (7) und dem weiteren Radialschneidkopf (16) korrespondierenden Spülmedienauslass (15, 17) vorgesehen ist,
und dass der Spülmedienauslass (15), welcher mit dem Radialschneidkopf (7) zum Aufrauen der Innenfläche (8) der zylindrischen Bohrung (9) korrespondiert, mit einer Richtungskomponente in Richtung der Werkzeugspitze (6) ausgebildet ist, und der Spülmedienauslass (17), welcher mit dem Radialschneidkopf (16) zum Schlichten der Innenfläche (8) der zylindrischen Bohrung (9) korrespondiert, mit einer Richtungskomponente in Richtung der Werkzeugaufnahme (2) ausgebildet ist.

3. Werkzeug (1) nach Anspruch 2,
**dadurch gekennzeichnet, dass**
die beiden Radialschneidköpfe (7, 16) in Umfangsrichtung um einen Winkel (α) von bis zu 120°, vorzugsweise um einen Winkel von bis zu 90°, versetzt zueinander angeordnet sind.

4. Werkzeug (1) nach Anspruch 2 oder 3,
**dadurch gekennzeichnet, dass**
ein dritter Radialschneidkopf (19) zum Kappen von eventuell verbliebenen Überständen von Spänen (12) vorgesehen ist, welcher in axialer Richtung zwischen dem Radialschneidkopf (7) zum Aufrauen der Innenfläche (8) der zylindrischen Bohrung (9) und der Werkzeugspitze (6) angeordnet ist, und welcher in Umfangsrichtung versetzt zu jedem der beiden anderen Radialschneidköpfe (7, 16) angeordnet ist, wobei der dritte Radialschneidkopf (19) ohne Spülmedienversorgung ausgebildet ist.

5. Werkzeug (1) nach Anspruch 4,
**dadurch gekennzeichnet, dass**
alle drei Radialschneidköpfe (7, 16, 19) in Umfangsrichtung um einen Winkel (α + β) zwischen den beiden außen liegenden Radialschneidköpfen (7, 16, 19) von bis zu 120°, bevorzugt um einen Winkel von bis zu 90°, versetzt zueinander angeordnet sind.

6. Werkzeug (1) nach einem der Ansprüche 2 bis 5 **gekennzeichnet durch** seine Aufnahme auf einer Horizontalspindel einer Werkzeugmaschine mit wenigstens einer Horizontalspindel.

7. Verfahren nach Anspruch 1 , **dadurch gekennzeichnet, dass** es als Vorbereitung auf eine thermische Beschichtung, insbesondere mittels Lichtbogendrahtspritzen, dient, vorzugsweise derart, dass dazu ein Werkzeug nach einem der Ansprüche 2 bis 6 verwendet wird.

8. Verfahren nach einem der Ansprüche 1 oder 7 **dadurch gekennzeichnet, dass** es zum Aufrauen der Innenfläche einer zylindrischen Bohrung (9) aus einem Nichteisenmetall, insbesondere Aluminium, oder einer das Nichteisenmetall aufweisenden Legierung, verwendet wird, vorzugsweise derart, dass dazu ein Werkzeug nach einem der Ansprüche 2 bis 6 verwendet wird.

## Claims

1. Method for roughening an inner surface (8) of a cylindrical bore (9), in particular a running surface in a cylinder bore or cylinder liner of an internal combustion engine, wherein, by means of a rotating tool (1), which is moved in a translatory manner in the axial direction of the cylindrical bore (9) and has a radial cutting head (7), a chip (12) is lifted by at least one cutting edge of the radial cutting head (7) and is broken off by means of a further edge or surface of the radial cutting head (7) in order to produce the roughened surface, wherein the tool (1) is inserted into the cylindrical bore (9) or passed through same, after which a positioning of the tool (1) takes place in the radial direction, and after which the material removal takes place by means of the rotating tool (1) when the tool (1) is moved in the advancing direction (V) thereof out of the cylindrical bore (9),
**characterized in that** finishing machining of the inner surface (8) of the cylindrical bore (9) is carried out by means of a further radial cutting head (16) in the same operation, before the radial cutting head (7) for roughening the inner surface (8) in the feed direction (V),
**and in that** a flushing medium for flushing and/or cooling is fed into the region of the radial cutting head (7) for roughening the inner surface (8) with a directional component counter to the advancing direction (V), and a flushing medium for flushing and/or cooling is fed into the region of the further radial cutting head (16) with a directional component in the advancing direction (V).

2. Tool (1) for roughening an inner surface (8) of a cylindrical bore (9), in particular a running surface in a cylinder bore or cylinder liner of an internal combustion engine, comprising a radial cutting head (7) which has at least one cutting edge for lifting a chip (12), and at least one further edge or surface for breaking off the chip (12) in order to produce a roughened surface, comprising a tool receptacle (2) designed to interact with a machine tool, and comprising a tool tip (6) opposite the tool receptacle (2) in the axial direction,
**characterized in that** a further radial cutting head (16) for finishing the inner surface (8) of the cylindrical bore (9) is arranged in the axial direction between the tool receptacle (2) and the radial cutting head (7) for roughening the inner surface (8) of the cylindrical bore (9), **and in that** at least one flushing media line (14) is provided, in each case having a flushing media outlet (15, 17) corresponding to the radial cutting head (7) and the further radial cutting head (16), **and in that** the flushing media outlet (15) that corresponds to the radial cutting head (7) for roughening the inner surface (8) of the cylindrical bore (9) is formed with a directional component in the direction of the tool tip (6), and the flushing media outlet (17) that corresponds to the radial cutting head (16) for finishing the inner surface (8) of the cylindrical bore (9) is formed with a directional component in the direction of the tool receptacle (2).

3. Tool (1) according to claim 2,
**characterized in that**
the two radial cutting heads (7, 16) are arranged so as to be offset from one another by an angle (α) of up to 120°, preferably by an angle of up to 90°, in the circumferential direction.

4. Tool (1) according to either claim 2 or claim 3,
**characterized in that**
a third radial cutting head (19) is provided for trimming of any remaining protrusions of chips (12), which cutting head is arranged in the axial direction between the radial cutting head (7) for roughening the inner surface (8) of the cylindrical bore (9) and the tool tip (6), and is arranged so as to be offset in the circumferential direction with respect to each of the two other radial cutting heads (7, 16), wherein the third radial cutting head (19) is formed without a flushing media supply.

5. Tool (1) according to claim 4,
**characterized in that**
all three radial cutting heads (7, 16, 19) are arranged so as to be offset from one another by an angle (α + β) between the two outer radial cutting heads (7, 16, 19) of up to 120°, preferably by an angle of up to 90°, in the circumferential direction.

6. Tool (1) according to any of claims 2 to 5, **characterized by** the reception thereof on a horizontal spindle of a machine tool having at least one horizontal spindle.

7. Method according to claim 1, **characterized in that** it is used as preparation for a thermal coating, in particular by means of wire arc spraying, preferably such that a tool according to any of claims 2 to 6 is used for this purpose.

8. Method according to either of claims 1 or 7, **characterized in that** it is used for roughening the inner surface of a cylindrical bore (9) made of a non-ferrous metal, in particular aluminum, or an alloy comprising the non-ferrous metal, preferably such that a tool according to any of claims 2 to 6 is used for this purpose.

## Revendications

1. Procédé pour rendre rugueuse une surface intérieure (8) d'un alésage cylindrique (9), en particulier une surface de roulement dans un alésage de cylindre ou une chemise de cylindre d'un moteur à combustion interne, dans lequel, par l'intermédiaire d'un outil (1) déplacé en rotation et en translation dans la direction axiale de l'alésage cylindrique (9) comportant une tête de coupe radiale (7) avec au moins un bord de coupe de la tête de coupe radiale (7), un copeau (12) est enlevé et rompu au moyen d'un autre bord ou une autre surface de la tête de coupe radiale (7), afin de générer la surface rugueuse, dans lequel l'outil (1) est introduit dans l'alésage cylindrique (9) ou est passé à travers celui-ci, après quoi un positionnement de l'outil (1) est effectué dans la direction radiale et après quoi, par l'intermédiaire de l'outil (1) déplacé en rotation, l'enlèvement de matière est effectué en lors de la sortie de l'outil (1) dans sa direction d'avance (V) hors de l'alésage cylindrique (9),
**caractérisé en ce que,** par l'intermédiaire d'une autre tête de coupe radiale (16) dans la même opération, dans la direction d'avance (V) de la tête de coupe radiale (7) pour rendre rugueuse la surface intérieure (8), un traitement de finition de la surface intérieure (8) de l'alésage cylindrique (9) est effectué,
**et en ce qu'**un milieu de rinçage pour le rinçage et/ou le refroidissement dans la zone de la tête de coupe radiale (7) pour rendre rugueuse la surface intérieure (8) est fourni avec une composante de direction opposée à la direction d'avance (V) et un milieu de rinçage pour le rinçage et/ou le refroidissement dans la zone de l'autre tête de coupe radiale (16) est fourni avec une composante de direction dans la direction d'avance (V).

2. Outil (1) pour rendre rugueuse une surface intérieure (8) d'un alésage cylindrique (9), en particulier une surface de roulement dans un alésage de cylindre ou une chemise de cylindre d'un moteur à combustion interne, comportant une tête de coupe radiale (7), qui présente au moins un bord de coupe pour enlever un copeau (12) et au moins un autre bord ou une autre surface pour rompre le copeau (12), afin de générer une surface rugueuse, comportant un réceptacle d'outil (2), conçu pour coopérer avec une machine-outil et comportant une pointe d'outil (6) opposée dans la direction axiale au réceptacle d'outil (2),
**caractérisé en ce qu'**une autre tête de coupe radiale (16) pour la finition de la surface intérieure (8) de l'alésage cylindrique (9) dans la direction axiale est agencée entre le réceptacle d'outil (2) et la tête de coupe radiale (7) pour rendre rugueuse la surface intérieure (8) de l'alésage cylindrique (9) **et en ce qu'**au moins une conduite de milieu de rinçage (14) est prévue comportant respectivement une sortie de milieu de rinçage (15, 17) correspondant à la tête de coupe radiale (7) et à l'autre tête de coupe radiale (16) **et en ce que** la sortie de milieu de rinçage (15), qui correspond à la tête de coupe radiale (7) pour rendre rugueuse la surface intérieure (8) de l'alésage cylindrique (9), est formée avec une composante de direction en direction de la pointe d'outil (6) et la sortie de milieu de rinçage (17), qui correspond à la tête de coupe radiale (16) pour la finition de la surface intérieure (8) de l'alésage cylindrique (9), est formée avec une composante de direction en direction du réceptacle d'outil (2).

3. Outil (1) selon la revendication 2,
**caractérisé en ce que**
les deux têtes de coupe radiale (7, 16) sont agencées décalées l'une par rapport à l'autre dans la direction circonférentielle d'un angle (α) allant jusqu'à 120°, de préférence d'un angle allant jusqu'à 90 °.

4. Outil (1) selon la revendication 2 ou 3,
**caractérisé en ce que**
une troisième tête de coupe radiale (19) pour la découpe de surplombs éventuellement restants de copeaux (12) est prévue, qui est agencée dans la direction axiale entre la tête de coupe radiale (7) pour rendre rugueuse la surface intérieure (8) de l'alésage cylindrique (9) et la pointe d'outil (6) et qui est agencée dans la direction circonférentielle décalée de chacune des deux autres têtes de coupe radiale (7, 16), dans lequel la troisième tête de coupe radiale (19) est formée sans alimentation en milieu de rinçage.

5. Outil (1) selon la revendication 4,
**caractérisé en ce que**
toutes les trois têtes de coupe radiale (7, 16, 19) sont agencées décalées l'une par rapport à l'autre dans la direction circonférentielle d'un angle (α + β) entre les deux autres têtes de coupe radiale (7, 16, 19) se trouvant à l'extérieur de jusqu'à 120°, de préférence d'un angle de jusqu'à 90°.

6. Outil (1) selon l'une des revendications 2 à 5, **caractérisé par** sa réception sur une broche horizontale d'une machine-outil comportant au moins une broche horizontale.

7. Procédé selon la revendication 1, **caractérisé en ce qu'**il sert de préparation à un revêtement thermique, en particulier au moyen de projection à l'arc électrique, de préférence de telle sorte que dans ce but, un outil selon l'une des revendications 2 à 6 est utilisé.

8. Procédé selon l'une des revendications 1 ou 7 **caractérisé en ce qu'**il est utilisé pour rendre rugueuse la surface intérieure d'un alésage cylindrique (9) en un métal non ferreux, en particulier l'aluminium ou un alliage présentant un métal non ferreux, de préférence de telle sorte que dans ce but, un outil selon l'une des revendications 2 à 6 est utilisé.
